# EUROPEAN PATENT APPLICATION

(11) **EP 1 526 735 A1**
(43) Date of publication of application: **27.04.2005**
(21) Application number: 04024763.7
(22) Date of filing: 18.10.2004
(51) Int. Cl.: H04N 7/24

(54) **A method of processing of data about television channels in digital television decoder at switching streams of television channels of integral transponder network**

(30) Priority: 20.10.2003 PL 36296303
(71) Applicant: Advanced Digital Broadcast Ltd., Hsin-Tien City, Taipei Count, 231 Taiwan, R.O.C. (TW); Advanced Digital Broadcast Polska Sp. zo.o., 65-119 Zielona Gora (PL)
(72) Inventor: Dabrowa, Andrzej, 65-001 Zielona Gora (PL)
(74) Representative: Szykula, Miroslaw

(57) **Abstract**

The object of the invention is a method of processing of data about television channels in digital television decoder at switching streams of television channels of integral transponder network, broadcasted in the television data stream, for example in MPEG standard (Motion Picture Experts Group).

The method according to this invention, in which sections of tables of data about channels and programs are read from the television data stream, processed adequately and stored in the memory, **characterized in that** the sections of tables (EIT) are read from SI data as sections of tables of data about channels and programs, and after reading the section of the table (EIT) it is compared with the data about sections of the table (EIT), stored hitherto in the memory of the decoder in order to identify it, and for unidentified section of the table (EIT), on the basis of data read from this section, data are created and stored in the memory, which enable identification of the sections of the table of ACTUAL type, broadcasted in the stream, which contains the program, defined by the table and identification of the section of the table of OTHER type, in which there is no program, defined by the table.

## Description

The object of the invention is a method of processing of data about television channels in digital television decoder at switching streams of television channels of integral transponder network, broadcasted in the television data stream, for example in MPEG standard (Motion Picture Experts Group).

In the heretofore methods of processing of data about television channels in digital television decoder at switching streams of television channels of integral transponder network, broadcasted in the television data stream, for example in MPEG standard (Motion Picture Experts Group, sections of selected data tables about channels and programs are read from the stream of television data. They are properly processed and stored in the memory and used for faster switching of television channels, broadcasted in different television streams.

The solutions, presented in American patents no. US 6,157,673 - "Fast extraction of program specific information from multiple transport streams" and US 5,594,4922 - "Method and apparatus for rapid channel selection", described methods of fast switching of channels in television systems, which minimize the waiting time for appearance of audio-video data after switching to a different stream, for example of MPEG-2 type.

Both inventions are related to methods of processing, in integrated receiver decoder, parts of PSI/SI data (Program Specific Information/ Service Information) which constitute a system of information about television channels and programs, on the basis of which, channels and programs are decoded and their characteristics are written in memory.

In case of the described solutions, a part of PSI data is processed and recorded in the memory. These data are collected from PAT tables, which constitute Program Association Tables, and PMT tables, which constitute Program Map Tables, thanks to which the parameters and location of audio-video data are defined in the television stream being decoded.

With a new attempt of switching to earlier decoded channel, the decoder tries to use the earlier recorded properties of the given stream in such a way that switching is accelerated without waiting for fetching of this information from the currently processed stream.
In the hitherto known solutions only processing of PSI data was optimized. The object of the present invention is processing of SI data, which allows further acceleration of the speed of channels switching.

In the method of processing of data about television channels at switching streams of television channels of integral transponder network in the digital television decoder, in which sections of data tables about channels and programs are read from television data stream, processed appropriately and written in the memory, ***the essence of the invention consists in that*** sections of EIT tables from SI data are read as sections of data tables about channels and programs, and after reading the section of EIT table, they are compared with the data about sections of EIT tables, hitherto written in the memory of the decoder in order to be identified, and for an unidentified section of EIT table, on the basis of data read from this section, there are data created and written in the memory, which enable identification of sections of the table of ACTUAL type, broadcasted in the stream, which includes a program, defined by the table and identification of the section of table of type OTHER in the stream, in which the program, defined by the table is missing.

It is also favorable according to the invention when in order to compare the read section of EIT table with the data about sections from EIT tables, recorded hitherto in the memory of the decoder at least four identifiers are compared, favorably a stream identifier, network identifier, channel identifier and at least one program identifier.

According to the invention, in case of consistency of all searched identifiers, from data about sections of EIT tables, recorded hitherto in the memory, the CRC checksums are fetched and it is checked if there is a value equal to the CRC checksum of the read section of EIT table among them, and in case of unidentified section of EIT table, data are created and written in the memory about this section of the EIT table.

Favorably according to the invention there is information recorded in the data, which enable identification of the EIT table, information concerns the section and the CRC checksums for the section of EIT table of ACTUAL type, broadcasted in the stream, which contains the program, defined by the EIT table and the section of EIT table of OTHER type, broadcasted in the stream, in which the program, defined by the EIT table, is missing.

It is also favorable that the CRC checksum, for the section of the table of EIT type opposite to the type of the read section of the EIT table, of appropriate ACTUAL or OTHER type, is computed for the read section of EIT table after modification of its identification data.

Favorably, in the method according to the invention, in the read section of the EIT table the value of TID identifier of the section of the EIT table is modified together with the value of the LTID identifier, after defining the modification value.

In compliance with the essence of the invention, in order to define the value of modification, the TID identifier of the read section of the EIT table is read, and on its basis it is checked if the section refers to the present event or the following event or a scheduled event, and next, in both cases, it is checked if the read section of the EIT table refers to the program, which is broadcasted in the received data stream, or in another data stream of a given network.

In compliance with the method according to the invention, if the section of the EIT table refers to the present or the following event and in the same time it refers to the event, broadcasted in the received stream, the value of TID and LTID identifiers for the received section of the EIT table is set to 4F, however if it is related in the same time to the program, broadcasted in another stream, the value of TID and LTID identifiers of the received section of the table EIT is set to 4E, before computing the new value of the CRC checksum.

In compliance with the method according to the invention, if the section of the EIT table refers to the program planned for the future and in the same time it refers to the program, broadcasted in currently decoded stream, the values of the TID and LTID identifiers of the received section of the EIT table are increased by 10₁₆ and if in the same time it refers to the program broadcasted in another stream, the values of the TID and LTID identifiers of the received section of the EIT table are decreased by 10₁₆ before computing the new value of the CRC checksum.

The method according to the invention is based on the analysis and processing of EIT tables (Event Information Table), describing programs available in the currently processed data stream and the programs available in other streams, broadcasted by other transponders.

Such transponders create a coherent television network. The processed EIT tables contain a CRC checksum, computed on the basis of their content. The essence of the operation of the method, according to the invention is a prediction, on the basis of data, received from one table, of the CRC checksum for the table of the opposite type.

The method, according to the invention is favorable because the time required for analysis of the data about the programs is limited. Moreover, the requirement of the digital television decoder for the memory, storing the data base about the programs, is decreased.

The difference between the described state of the art and the presented solution consists in that the acceleration of the data analysis after switching the television channels is attained by analysis of the EIT tables and predication of their CRC checksums (CRC - Cyclic Redundancy Check). This solution is applicable in coherent networks of television transponders.

The object of the invention was presented in details below in the example of embodiment, more closely described by the drawing, in which in Fig. 1 shows a simplified block diagram of the digital television decoder, containing only elements required for presenting the idea of the method according to the invention. Fig. 2 of the drawing presents schematically the content of exemplary television data streams, broadcasted by five different transponders, which constitute a coherent network. Fig. 3 of the drawing demonstrates the structure of a typical EIT data table according to DVB standard (Digital Video Broadcasting). Fig. 4 presents a structure of the record, describing a single section of the EIT table in the database about the EIT tables, while fig. 5 shows the procedure, which illustrates the course of processing the EIT tables received from the television data stream in line with the method according to the invention.

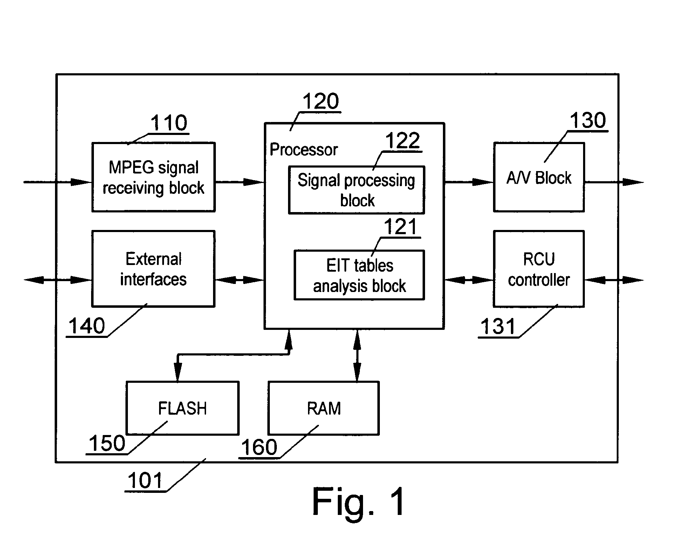

The decoder of digital television 101, for which the solution according to the invention is dedicated, is divided into many modules, while its simplified version was shown in Fig. 1, as mentioned above.

The most important module of the decoder is processor 120, which through a block of signal processing 122 manages its work. Additionally, according to the invention, the processor 120 includes an internal circuit 121 of EIT table analysis and computing of the values of CRC checksums. There is signal from MPEG 110 signal reception block connected to the processor.

Additionally the processor has a possibility of bidirectional exchange of data through external interfaces 140. The digital television decoder 101 includes also a few types of memory, which are bidirectionally connected with the processor 120.

These are memories: non-volatile memory (for example, of FLASH type) and operational RAM memory 160. There are programs of controlling operation of the digital television decoder 101 stored in these memories, including a program, managing the EIT tables, and SI data read from television data streams.

The block A/V 130 and the remote control unit block 131 allow to broadcast appropriately the output A/V signal and communicate with external control devices, for example a remote control unit.

The method of processing in digital television decoder 101 of data about television channels, at switching television channel streams of integrated transponder network, according to the invention, requires managing and analysis of the EIT tables, broadcasted in the television data stream.

Each EIT table (Event Information Table), constituting the information table about the program, consists of one or a greater number of sections.

According to the MPEG standard there are EIT tables, broadcasted in the stream. These EIT tables describe television channels and their programs, available both in a given stream as well as in other television streams, which belong to one integral network of television transponders.

The EIT tables, describing television channels and their programs, available in the stream, in which the given table is broadcasted, are defined as EIT tables of ACTUAL type, while EIT tables, which describe television channels and their programs, available in other streams, are defined as EIT tables of OTHER type.

The EIT tables of ACTUAL type can be distinguished from EIT tables of OTHER type by the number, identifying a given EIT table.

When the EIT table refers to the programs, being currently broadcasted (present) or it refers to programs occurring directly after the currently broadcasted program (following), the identifier number (in the hexadecimal notation) is 4E for the type ACTUAL and 4F for the type OTHER.

When the EIT table refers to programs, planned for the future (scheduled events), the identifier of the EIT table of ACTUAL type is contained within the range of 50 to 5F, and the identifier of the EIT table of OTHER type is contained within the range of 60 to 6F in hexadecimal notation.

There are two methods of marking the EIT tables, known from the DVB (EN 300 468 V1.3.1 (1998-02)) digital television standard. The first of them identifies the EIT tables by means of the number of version, and the second one by means of the field, where the CRC checksum, computed for the given section of the EIT table, is recorded on the basis of its content.

The method according to the invention refers to streams, in which the EIT tables are marked by means of fields of CRC checksums.

Such method of marking streams is more convenient in use from the point of view of the broadcaster, because it does not require changes of the numbers of table versions. CRC checksums are changing automatically in case of changes in the contents of the EIT tables.

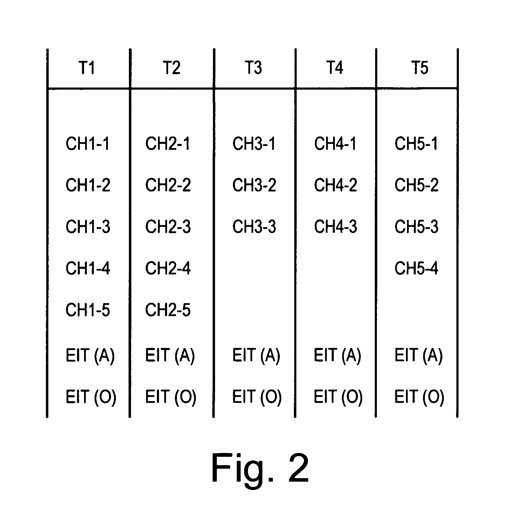

The content of exemplary television data streams, broadcasted by five different transponders, was illustrated in form of a diagram in Fig. 2.

These transponders constitute an integral network, which means, that besides tables, describing the programs from the given stream EIT (A) of ACTUAL type, in each T1, T2, T3, T4, T5 stream, there are tables of EIT (O) of OTHER type sent. These tables describe the programs, available in other television streams.

The first stream T1 and the second stream T2 contain five television channels each. These are respectively channels CH-1 to CH-5 and CH2-1 to CH2-5, the fifth stream T5 contains the television channels from CH5-1 to CH5-4, and the streams T3 and T4 three channels each, i.e. respectively the channels CH3-1 to CH3-3 and the channels CH4-1 to CH4-3.

In the T1 stream there are, for example, BIT (A) tables of ACTUAL type broadcasted. These tables describe programs of each of the five television channels available in this stream, i.e. respectively CH1-1 to CH1-5.

Additionally T1 contains also tables EIT (O) of OTHER type, which describe programs of other 15 channels.

This means that each of the transponders broadcasts EIT tables, which describe the whole range of programs, broadcasted in the integral network of transponders. Each of the programs is described by the table of ACTUAL type, broadcasted in the stream, in which the given program is broadcasted, and tables of OTHER type, broadcasted in other streams. The contents of the tables of ACTUAL and OTHER type, describing the same program, is different only by the value of the identifier of the table type, in connection with which they have different CRC checksums.
In the hitherto applied methods of processing SI data, after changing the transponder of a given network, one should fetch all EIT tables from the stream, broadcasted by this transponder, so that in the storage of the decoder 101 there are always up-to-date data, which are used for example by the software of the Electronic Program Guide (EPG).

The process of fetching and processing all the EIT tables can appear to be very time consuming.

The method according to the invention limits the time of processing all the EIT tables after changing the transponder. It is possible thanks to computing of the CRC checksum for the EIT table of a different type, depending on the needs, respectively for the ACTUAL or OTHER type.

The original EIT table is received from the stream and after earlier changes of its type into another one; the CRC checksum can be computed for a table of a different type and stored in the memory. It allows checking later if the data related to the EIT table, received from another stream are already available in the memory, by comparing the CRC checksum of the received table with the CRC checksums, written in the memory.

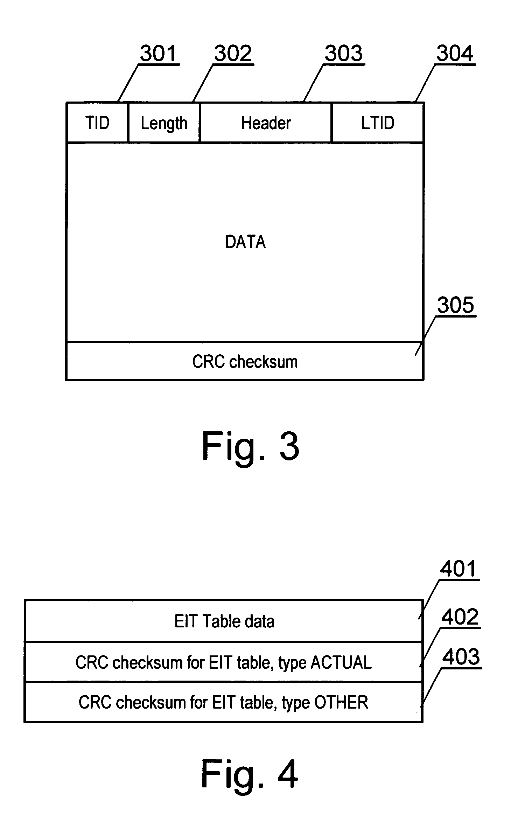

The structure of a typical EIT table according to the DVB standard is presented in Fig. 3. This table consists of 5 main fields 301- 305 and the field, containing Data.

In the method, according to the invention the following is analyzed and/or modified: the TID table identifier (Table ID) from the field 301, the LTID identifier (the last table ID) from the field 304 and the CRC checksum from the field 305.

The TID identifier is the present identifier of the EIT table, and the LTID identifier, used with scheduled programs, defines the last used number of the TID identifier of the EIT table, for example 55₁₆ from the range of 50₁₆-5E₁₆.

The length of the section of the EIT table is defined in the field 302, and the field 303 contains the section header.
In case when the EIT table is divided into a few sections, the TID and LTID identifiers are common for all the sections of the EIT table, and the CRC checksum is computed separately for each EIT table section.

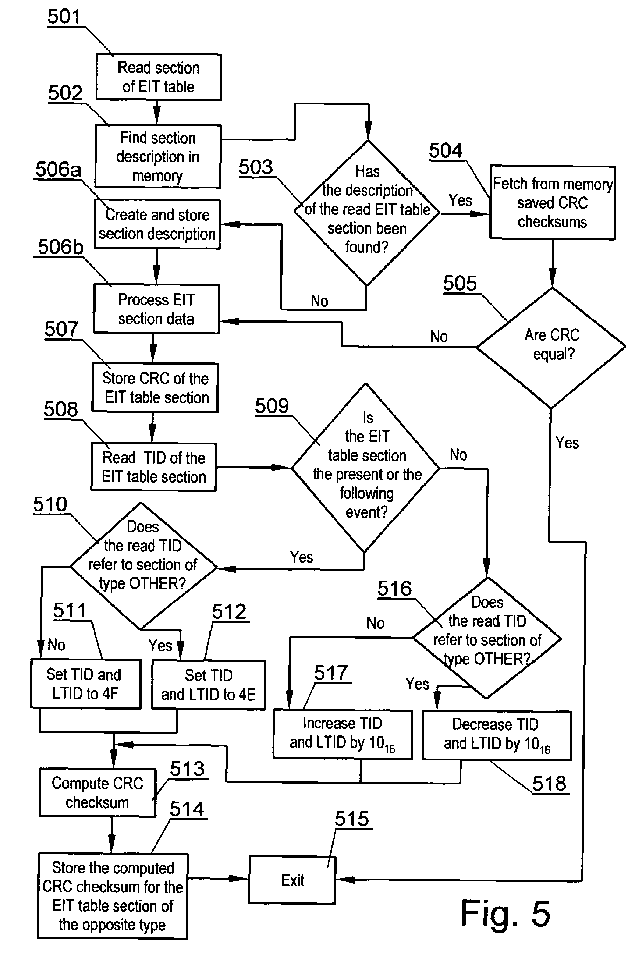

The method of processing EIT tables received from the television data stream according to the invention was presented in the detailed procedure, illustrated in Fig. 5.

The procedure starts with the step 501, where a section of the EIT table is read from the television data stream and stored in the memory of the decoder 101. Next, in step 502, in the data describing the sections of the EIT tables, written in the memory of the digital television decoder 101, the description of the read section of the EIT table is searched.

Generally the description of the EIT table consists of four identifiers of the program: the stream identifier (tranport_stream_id), the network identifier (original_network_id), the channel identifier (service_id) and the program identifier (event_id). It also contains the CRC checksums, illustrated in Fig. 4.

After the end of this operation, in the next step 503 it is checked if the description of the read section of the EIT table is found.

If the description of the read section of the EIT table is found, the procedure goes to the step 504, where the saved CRC checksums are fetched from the memory for the identified section of the EIT table.

Next, in the step 505, the system checks, if among the identified CRC checksums the CRC checksum is found, which is equal to the CRC checksum of the section of the BIT table, received from the stream of the television data, which are currently processed in the digital television decoder 101.

If it is so, the procedure goes to the step 515, where it ends. In opposite case the system performs the step 506b of the procedure.

If the check in points 503 and 505 gives a negative result, the procedure goes to the step 506a, in which after recording the data of the description of the read section of the EIT table in the database about the EIT tables, its data are processed in step 506b (for example information about the program is refreshed).

The next step, i.e. 507 is to record the CRC checksum read from the section of the EIT table in the database about the EIT tables.

The structure of the record, which describes a single section of the EIT table in the database about EIT tables, is presented in Fig. 4.

This structure is divided into three parts, the first part of which 401 contains data of the section of the EIT table, the second part 402 contains the value of the CRC checksum for the section of the BIT table of ACTUAL type, and the last part 403 contains the value of the CRC checksum of the EIT table of OTHER type.

In the next step 508 of the procedure, there is a TID identifier, of the section of the EIT table, fetched from the memory. Next, in step 509 it is checked if the fetched TID identifier of the section of the EIT table refers to the present event or the following event, or a scheduled event.
In the first case the procedure moves to the step 510, and in the second one to the step 516.

In the step 510 it is checked if the read section of the EIT table is of ACTUAL type (it refers to the event broadcasted in the present stream) or to the OTHER type (it refers to the event broadcasted in another stream of the given network).

If it is an event from the current stream, there is a passage made to the step 511 of the procedure, in which the values of identifiers TID and LTID of the currently processed section of the table are set to 4F.

In opposite case, when the section of the EIT table refers to the program from another stream, the values of the TID and LTID identifiers are set in the step 512_of the procedure to 4E. After setting them the procedure goes to the step 513.

In the second case, it is checked in the step 516 of the procedure if the identifier TID corresponds to the section of the EIT table of ACTUAL type (related to the event broadcasted in the current stream), or a section of the EIT table of OTHER type (related to the event broadcasted in another stream of the given network).

If it is an event from the current stream, there is a passage made to the step 517 of the procedure, in which the values of TID and LTID identifiers are increased by 10₁₆.

In opposite case when the section of the EIT table refers to the program of another stream, in the step 518 of the procedure the values of the identifiers TID and LTID are decreased by 10₁₆.

After setting the TID and LTID identifiers, the procedure goes to the step 513.

In each step the CRC checksum is computed for the section of the EIT table with modified identifiers TID and LTID.

In the next step 514 of the procedure, in the structure of the record, describing section of the EIT table, illustrated in Fig. 4, the computed value of the CRC checksum is recorded in the field 402, if it refers to the section of the EIT table of ACTUAL type or in the field 403, if it refers to the section of the EIT table of the OTHER type.

The last step 515 is the exit from the procedure of processing data of the read section of the EIT table. The procedure can be started once again, to process the next received section of the EIT table.

## Claims

1. The method of processing of data about television channels in the digital television decoder at switching streams of television channels of integral transponder network, in which sections of tables of data about channels and programs are read from the television data stream, processed adequately and stored in the memory, **characterized in that** the sections of tables (EIT) are read from SI data as sections of tables of data about channels and programs, and after reading the section of the table (EIT) it is compared with the data about sections of the table (EIT), stored hitherto in the memory of the decoder in order to identify it, and for unidentified section of the table (EIT), on the basis of data read from this section, data are created and stored in the memory, which enable identification of the sections of the table of ACTUAL type, broadcasted in the stream, which contains the program, defined by the table and identification of the section of the table of OTHER type, in which there is no program, defined by the table.

2. The method according to claim 1, **characterized in that** in order to compare the read section of the table (EIT) with the data about the sections of tables (EIT) stored hitherto in the memory of the decoder, at least four identifiers, favorably the stream identifier, the network identifier, the channel identifier and at least one program identifier are compared.

3. The method according to claim 2, **characterized in that** in case of a consistency of all searched identifiers, there are checksums (CRC) fetched from the data about the sections of the tables (EIT) recorded hitherto in the memory, and it is checked if there is a value equal to the checksum (CRC) read from the section of the table (EIT) and in case of an unidentified table section (EIT) data about this table section (EIT) are created and stored in the memory.

4. The method according to claim 1, **characterized in that** in the data, which enable identification of the section of the table(EIT), information about the section and checksums (CRC) is recorded for the section of the table (EIT) of ACTUAL type, broadcasted in the stream, which contains the program, defined by the table (EIT)and section of the table (EIT) of the OTHER type, broadcasted in the stream, in which there is no program, defined by the table (EIT).

5. The method according to claim 4, **characterized in that** the checksum (CRC) for the section of the table (EIT) of the opposite type to the type of the read section of the table (EIT), respectively of ACTUAL or OTHER type, are computed for the read section of the table (EIT) after modification of its identification data.

6. The method according to claim 5, **characterized in that** in the read section of the table (EIT) the value of the identifier (TID) of the section of the table (EIT) and the value of the identifier (LTID) is modified after defining the value of the modification.

7. The method according to claim 6, **characterized in that** in order to define the value of the modification, the identifier (TID) of the read section of the table (EIT) is read and on its basis it is checked if the section refers to the present or the following event or a scheduled event, and next in both cases, it is checked if the read section of the table (EIT) refers to the event, which is broadcasted in the received data stream, or in another data stream of the given network.

8. The method according to claim 7, **characterized in that** if the section of the table (EIT) refers to the present or the following event and in the same time it refers to the program, broadcasted in the received stream, the values of identifiers (TID) and (LTID) of the received section of the table (EIT) are set to 4F, however if the table in the same time refers to the program broadcasted in another stream, the values of identifiers (TID) and (LTID) of the selected section of the table (EIT) are set to 4E, before computing the new value of the checksum (CRC).

9. The method according to claim 7, **characterized in that** if the section of the table (EIT)refers to the scheduled event and in the same time it refers to the event broadcasted in the received stream, the values of identifiers (TID) and (LTID) of the received section of the table (EIT) are increased by 10₁₆, however if in the same time it refers to the program broadcasted in another stream, the values of identifiers (TID) and (LTID) of the received section of the table (EIT) are decreased by 10₁₆ before computing the new value of the checksum (CRC).
